# EUROPÄISCHE PATENTANMELDUNG

(11) **EP 0 617 068 A2**
(43) Veröffentlichungstag der Anmeldung: **28.09.1994**
(21) Anmeldenummer: 94103882.0
(22) Anmeldetag: 14.03.1994
(51) Int. Cl.: C08G 18/40, C08G 18/76, C08J 9/14

(54) **Mischungen aus Polyisocyanaten mit Pentan und/oder Cyclopentan, ein Verfahren zur Herstellung von Urethan- und gegebenfalls Isocyanuratgruppen aufweisenden Hartschaumstoffen und deren Verwendung als Wärmedämmaterialien**

(30) Priorität: 25.03.1993 DE 4309691
(71) Anmelder: BAYER AG, 51368 Leverkusen (DE)
(72) Erfinder: Leyrer, Ulrich, Dr., D-51375 Leverkusen (DE); Vogel, Christoph, Dipl.-Ing., D-51519 Odental (DE); Kapps, Manfred, Dr., D-51467 Bergisch Gladbach (DE)

(57) **Zusammenfassung**

Urethan- und gegebenenfalls Isocyanuratgruppen aufweisende Hartschaumstoffe werden durch Umsetzung von
a) Mischungen von Polyisocyanaten mit Pentan und/oder Isopentan mit
b) Verbindungen mit mindestens zwei gegenüber Isocyanaten reaktionsfähigen Wasserstoffatomen vom Molekulargewicht 400 bis 10.000 und
c) gegebenenfalls Verbindungen mit mindestens zwei gegenüber Isocyanaten reaktionsfähigen Wasserstoffatomen und einem Molekulargtewicht von 32-399, gegebenenfalls in Gegenwart von
d) weiteren Treibmitteln und an sich bekannten Hilfs- und Zusatzstoffen
hergestellt und als Dämmaterialien verwendet.

## Beschreibung

Pentan (n-Pentan, i-Pentan) und Cyclopentan bzw. deren Gemische haben in jüngster Zeit als FCKW-Ersatz-Treibmittel bei der Herstellung von harten PUR-Schaumstoffen besondere Bedeutung gefunden. Die Verwendung von Pentan als Treibmittel für die Herstellung von harten PUR-Schaumstoffen ist an sich schon seit längerem bekannt und z.B. in US-PS 3072582, DE-OS 394769 und DE-OS 405439 beschrieben.

Nach den bekannten Verfahren wird Pentan bei der Schaumstoffherstellung wie FCKW als Treibmittel in die Polyolkomponente eingemischt oder der Reaktionsmischung mittels einer geeigneten Mischvorrichtung direkt zugeführt. Nachteilig ist die üblicherweise nicht ausreichende Löslichkeit von Pentan in der Polyolkomponente, so daß die Pentankonzentration niedrig gehalten werden muß. Um wirtschaftlich ausreichend niedrige Schaumstoffrohdichten zu erzielen, wird der Polyolkomponente eine relativ hohe Wassermenge zugesetzt, damit durch Reaktion von Wasser mit dem Isocyanat sich bildendes Kohlendioxydgas als zusätzliches Treibmittel wirken kann. Der hohe Kohlendioxidgehalt im Zellgas des Schaumstoffs erhöht jedoch die Wärmeleitfähigkeit und verringert somit die Wärmedämmwirkung. Um den Wassergehalt im Reaktionsgemisch zu beschränken, werden oft Pentan-Polyol-Emulsionen mit einer Pentanmenge hergestellt, die die Löslichkeit in der Polyolkomponente deutlich überschreitet. Diese Emulsionen sind aber nur kurze Zeit stabil, und bei der Schaumstoffherstellung ist ein erheblicher Pentanverlust zu beobachten.

Die Aufgabe der vorliegenden Erfindung bestand darin, harte PUR-Schaumstoffe, die gegenenfalls auch Isocyanurat-Strukturen aufweisen, unter Verwendung von Pentan und/oder Cyclopentan als Treibmittel mit guten thermischen Dännneigenschaften herzustellen. Es sollte eine Möglichkeit gefunden werden, durch die Pentan und/oder Cyclopentan in hohen Konzentrationen den Reaktionskomponenten in gelöster Form zugesetzt werden kann, damit bei gleichbleibenden wirtschaftlichen Rohdichten die Wasserkonzentration des Reaktionsgemisches reduziert werden kann und zum Aufschäumen weniger Kohlendioxid mitverwendet wird.

Die Aufgabe konnte überraschenderweise durch den Befund gelöst werden, daß sich Pentan und Cyclopentan bis zu 30 Gew.-% in Polyisocyanaten, vorzugsweise in polymerem MDI bzw. in PUR-modifiziertem polymerem MDI, lösen. Durch Einmischen von Pentan und/oder Cyclopentan in polymeres MDI bzw. in Urethanmodifiziertes polymeres MDI wird bei der Herstellung PUR-Hartschaumstoffen zur Erzielung niedriger Rohdichten wenig oder kein zusätzliches Wasser zur Bildung von Kohlendioxid als Co-Treibmittel benötigt, da das Polyisocyanat eine ausreichende Menge Pentan und/oder Cyclopentan aufnimmt und diese voll zum Aufschäumen des Reaktionsgemisches genutzt werden kann.

Gegenstand der Erfindung sind Mischungen aus Polyisocyanaten und Pentan und/oder Cyclopentan.

Gegenstand der Erfindung ist ferner ein Verfahren zur Herstellung von Urethan- und gegebenenfalls Isocyanuratgruppen aufweisenden Hartschaumstoffen durch Umsetzung von
a) Mischungen von Polyisocyanaten mit Pentan und/oder Cyclopentan mit
b) Verbindungen mit mindestens zwei gegenüber Isocyanaten reaktionsfähigen Wasserstoffatomen vom Molekulargewicht 400 bis 10.000 und
c) gegebenenfalls Verbindungen mit mindestens zwei gegenüber Isocyanaten reaktionsfähigen Wasserstoffatomen und einem Molekulargewicht von 32-399, gegebenenfalls in Gegenwart von
d) weiteren Treibmitteln und an sich bekannten Hilfs- und Zusatzstoffen.

Erfindungsgemäß bevorzugt ist, daß
- die neuen Mischungen (Komponente a))als Polyisocyanat ein polymeres Diphenylmethandiisocyanat (MDI) mit einem Gehalt an monomerem MDI von 25-70 Gew.-% oder ein urethan-modifiziertes polymeres MDI mit einem Gehalt an monomerem MDI von 35-70 Gew.-% enthalten,
- die neuen Mischungen (Komponente a)) n-Pentan und/oder i-Pentan und/oder Cyclopentan enthalten,
- die neuen Mischungen (Komponente a)) 1 bis 30 Gew.-% n-Pentan und/oder i-Pentan und/oder Cyclopentan enthalten und
- die Komponente b) 0,4 bis 4 Gew.-% Wasser als Co-Treibmittel und gegebenenfalls Schaumstabilisatoren, Flammschutzmitteln und Katalysatoren enthält.

Die Erfindung betrifft auch die Verwendung der Urethan- und gegebenenfalls Isocyanuratgruppen aufweisenden Hartschaumstoffe als Dämmaterialien.

Die nach dem erfindungsgemäßen Verfahren hergestellten Hartschaumstoffe weisen gegenüber den nach dem Stand der Technik hergestellten Schaumstoffen folgende Vorteile auf:
- niedrige Wärmeleitfähigkeit, da der CO₂-Gehalt im Zellgas niedrig ist.
- zäh-elastische Beschaffenheit und gute Haftung an Deckschichtenmaterialien.

Die Herstellung von Urethan- und gegebenenfalls Isocyanuratgruppen aufweisenden Schaumstoffen ist an sich bekannt und z.B. in DE-PS 11 12 285, GB-PS 11 04 394, DE-OS 15 95 844 und 17 69 023 sowie im Kunststoff-Handbuch Band VII, Polyurethane, herausgegeben von Vieweg und Höchtlen, Carl-Hanser-Verlag München 1966 sowie in der Neuauflage dieses Buches, herausgegeben von G. Oertel, Carl-Hanser-Verlag München, Wien 1983, beschrieben.

Für die Herstellung der Komponente a) werden als Polyisocyanate eingesetzt:

Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche Formel

Q(NCO)ₙ

in der
n = 2-4, vorzugsweise 2 und 3, und
Q einen aliphatischen Kohlenwasserstoffrest mit 2-18, vorzugsweise 6-C-Atomen, einen cycloaliphatischen Kohlenwasserstoffrest mit 4-15, vorzugsweise 5-10 C-Atomen, bevorzugt einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen aromatischen Polyisocyanate, z.B. das 2,4- und 2,6-Toluylendiisocyanat, sowie beliebige Gemische dieser Isomeren ("TDI"); Polyphenylpolymethylenpolyisocyanate, wie sich durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten. Wie bereits erwähnt, ist erfindungsgemäß ein polymeres MDI mit einem Gehalt an monomerem MDI von 25 bis 70 Gew.-% oder ein urethan-modifiziertes polymeres MDI mit einem Gehalt an monomerem MDI von 35 bis 70 Gew.-% besonders bevorzugt.

Den Polyisocyanaten wird Pentan (n- und/oder i-Pentan) und/oder Cyclopentan zugemischt.

Die Komponente b) umfaßt Verbindungen mit mindestens zwei gegenüber Isocyanaten reaktionsfähigen Wasserstoffatomen von einem Molekulargewicht in der Regel von 400-10.000 ("Polyolkomponente"). Hierunter versteht man neben Aminogruppen, Thiogruppen oder Carboxylgruppen aufweisende Verbindungen vorzugsweise Hydroxylgruppen aufweisende Verbindungen, insbesondere 2 bis 8 Hydroxylgruppen aufweisende Verbindungen, speziell solche vom Molekulargewicht 1.000 bis 6.000, vorzugsweise 2.000 bis 6.000, z.B. mindestens 2, in der Regel 2 bis 8, vorzugsweise aber 2 bis 6 Hydroxylgruppen aufweisende Polyether und Polyester sowie Polycarbonat und Polyesteramide, wie sie für die Herstellung von homogenen und von zellförmigen Polyurethanen an sich bekannt sind und wie sie z.B. in der DE-OS 28 32 253, Seiten 11-18, beschrieben werden.

Die Komponente d) umfaßt Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen.

Diese Verbindungen weisen in der Regel 2 bis 8, vorzugsweise 2 bis 4, gegenüber Isocyanaten reaktionsfähige Wasserstoffatome auf Beispiele hierfür werden in der DE-OS 28 32 253, Seiten 19-20, beschrieben.

Zur Schaumstoffherstellung werden gegebenenfalls Hilfs- und Zusatzmittel mitverwendet wie
- weitere leicht flüchtige organische Substanzen und/oder Wasser als zusätzliche Treibmittel, wobei Wasser in der Regel in einer Menge von 0,5 bis 3,5 Gew.-%, bezogen auf die Komponente b), eingesetzt wird,
- Katalysatoren der aus der Polyurethanchemie an sich bekannten Art in Mengen von bis zu 10 Gew.-%, bezogen auf die Komponente b),
- oberflächenaktive Zusatzstoffe, wie Emulgatoren und Schaumstabilisatoren,
- Flammschutzmittel, z.B. phosphorhaltige, halogenfreie Flammschutzmittel wie Triethylphosphat, Diphenylkresylphosphat, roter Phosphor, Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Durchführung des Verfahrens zur Herstellung der Hartschaumstoffe:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121-205 beschrieben.

Erfindungsgemäß wird in der Regel bei einer Kennzahl von 90-130, oft aber auch - bei der Herstellung von Urethan- und Isocyanuratgruppen aufweisenden Schaumstoffen - bei einer Kennzahl über 130, z.B. von 200-400, gearbeitet.

Die Schaumstoffe können durch Blockverschäumung oder nach dem an sich bekannten Doppeltransportbandverfahren hergestellt werden.

Die nach der Erfindung erhältlichen Produkte finden vorzugsweise als Wärmedämmaterialien z.B. als Dämmplatten für die Dachisolierung und in Kühlschränken und Gefriertruhen Anwendung.

### Ausführungsbeispiele

### Herstellung von PUR-Hartschaumstoffen

(GT = Gewichtsteile)

### Beispiel 1 (Vergleich)

### A Komponente

Polyolmischung der OH-Zahl 400 aus:
47,85 GT eines Polyethers der OH-Zahl 450, hergestellt durch Umsetzung einer Mischung aus Zucker und Glycerin mit Propylenoxid
9,57 GT eines Esterpolyols der OH-Zahl 290, hergestellt durch Umsetzung von Phthalsäureanhydrid mit Diethylenglykol und Ethylenoxid
38,28 GT eines Polyethers der OH-Zahl 380, hergestellt durch Umsetzung von Trimethylpropan mit Propylenoxid
mit
1,91 GT Wasser
1,91 GT eines handelsüblichen Schaumstoffstabilisators (RS 201 der UCC)
0,48 GT Pentamethyldiethylentriamin
2,3 GT N,N-Dimethylcyclohexylamin
13,0 GT Cyclopentan

### B Komponente 148,0 GT polymeres MDI (Desmodur® 44V20, Bayer AG, Leverkusen) (NCO-Gehalt 31,5 Gew.-%) Die hergestellten Mischungen A und B wurden mittels eines Rührers (1000 UpM) bei 20 C intensiv gemischt, die Reaktionsmischung in einem offenen Karton mit den Innenabmessungen 20 x 20 x 20 cm eingebracht und aufschäumen lassen. Man erhielt einen gleichmäßigen PUR-Hartschaumstoff mit einer Rohdichte von 28 kg/m³. Ein zweites Reaktionsgemisch (110 g) o.g. Mischungsverhältnisse wurde in einer geschlossenen Form (22 x 22 x 6 cm) auf eine Rohdichte von 38 kg/m³) verdichtet. Die Wärmeleitfähigkeit dieses verdichteten Schaumstoffes lag bei 22-23 mW/Km (24 C Mitteltemperatur).

### Beispiel 2 (erfindungsgemäß)

### A Komponente

Polyolmischung der OH-Zahl 400 aus:
47,85 GT eines Polyethers der OH-Zahl 450, hergestellt durch Umsetzung einer Mischung aus Zucker und Glycerin mit Propylenoxid
9,57 GT eines Esterpolyols der OH-Zahl 290, hergestellt durch Umsetzung von Phthalsäureanhydrid mit Diethylenglykol und Ethylenoxid
38,28 GT eines Polyethers der OH-Zahl 380, hergestellt durch Umsetzung von Trimethylpropan mit Propylenoxid
mit
1,91 GT Wasser
1,91 GT eines handelsüblichen Schaumstabilisators gemäß Beispiel 1
0,48 GT Pentamethyldiethylentriamin
2,3 GT N,N-Dimethyl-cyclohexylamin

### B Komponente

Mischung aus:
148,0 GT polymerem MDI (Desmodur 44V20, Bayer AG, Leverkusen)
13,00 GT Cyclopentan
Die Mischung A und B wurden wie im Beispiel 1 beschrieben zur Reaktion gebracht. Man erhielt einen frei aufgeschäumten PUR-Hartschaum mit einer Rohdichte von 26 kg/m³. Die Wärmeleitzahl des auf eine Rohdichte von 35-36 kg/m³ verdichteten Schaumstoffes (analog Beispiel 1) lag bei 22 mW/Km (24 C Mitteltemperatur).

### Beispiel 3 (erfindungsgemäß)

### A Komponente

Polyolmischung der OH-Zahl 400 aus:
47,85 GT eines Polyethers der OH-Zahl hergestellt durch Umsetzung einer Mischung aus Zucker und Glycerin mit Propylenoxid
9,57 GT eines Esterpolyols der OH-Zahl 290, hergestellt durch Umsetzung von Phthalsäureanhydrid mit Diethylenglykol und Ethylenoxid
38,28 GT eines Polyethers der OH-Zahl 380, hergestellt durch Umsetzung von Trimethylpropan mit Propylenoxid
mit
1,40 GT Wasser
1,91 GT eines handelsüblichen Schaumstabilisators gemäß Beispiel 1
0,48 GT Pentamethyldiethylentriamin
3,0 GT N,N-Dimethyl-cyclohexylamin

### B Komponente

Mischung aus
143,5 GT polymerem MDI (Desmodur 44V20, Bayer AG, Leverkusen)
18,5 GT Cyclopentan
Die Mischungen A und B wurden wie im Beispiel 1 zur Reaktion gebracht. Man erhielt einen frei aufgeschäumten PUR-Hartschaumstoff mit einer Rohdichte von 24 kg/m³. Die Wärmeleitzahl des auf eine Rohdichte von 35-36 kg/m³ verdichteten Schaumstoffes (analog Beispiel 1) lag bei 21 mW/Km (24 C Mitteltemperatur).

### Beispiel 4 (erfindungsgemäß)

### A Komponente

Polyolmischung der OH-Zahl 490 aus:
44,25 GT eines Polyethers der OH-Zahl 460 hergestellt durch Umsetzung einer Mischung von Zucker und Diethylenglykol mit Propylenoxid
35,10 GT eines Polyethers der OH-Zahl 250, hergestellt durch Umsetzung von Glycerin mit Propylenoxid
8,85 GT eines Polyethers, der OH-Zahl 470, hergestellt durch Umsetzung von Toluylendiamin mit Ethylenoxid und Propylenoxid.
8,80 GT Glycerin
mit
1,0 GT Wasser
2,0 GT eines handelsüblichen Schaumstabilisators (B 8407 der Goldschmidt AG, Essen)
3,0 GT N,N-Dimethyl-cyclohexylamin

### B Komponente

Mischung aus
147,0 GT polymerem MDI (Desmodur 44V20, Bayer AG, Leverkusen)
22,0 GT Cyclopentan
Die Mischungen A und B wurden wie im Beispiel 1 zur Reaktion gebracht. Man erhielt einen frei aufgeschäumten Hartschaumstoff mit einer Rohdichte von 23 kg/m³.

Die Wärmeleitzahl des auf eine Rohdichte von 35-36 kg/m³ verdichteten Schaumstoffes (analog Beispiel 1) lag bei 20 mW/Km (24 C Mitteltemperatur).

### Beispiel 5 (erfindungsgemäß)

### A Komponente

Polyolmischung der OH-Zahl 550 aus:
50 GT eines Polyethers der OH-Zahl 460, hergestellt durch Umsetzung einer Mischung von Zucker und Diethylenglykol mit Propylenoxid
25 GT eines Polyethers der OH-Zahl 250, hergestellt durch Umsetzung von Glycerin mit Propylenoxid
10 GT eines Polyethers der OH-Zahl 470, hergestellt durch Umsetzung von Toluylendiamin mit Ethylenoxid und Propylenoxid
15,0 GT eines Polyethers der OH-Zahl 1400, hergestellt durch Umsetzung von Sorbit mit Propylenoxid und Zumischen von Ethylenglykol
mit
0,5 GT Wasser 2,0 GT eines handelsüblichen Schaumstabilisators (B 8407 der Goldschmidt AG, Essen)
3,0 GT N,N-Dimethyl-cyclohexylamin

### B Komponente

### Mischung aus 152,0 GT polymerem MDI (Desmodur 44V20, Bayer AG, Leverkusen) 27,0 GT Cyclopentan

Die Mischungen A und B wurden wie im Beispiel 1 beschrieben zur Reaktion gebracht. Man erhielt einen frei aufgeschäumten Hartschaumstoff mit einer Rohdichte von 23 kg/m³. Die Wärmeleitzahl des auf eine Rohdichte von 35-36 kg/m³ verdichteten Schaumstoffes (analog Beispiel 1) lag bei 19-20 mW/Km (24 C Mitteltemperatur).

### Herstellung von Urethan- und Isocyanuratgruppen aufweisenden (PUR/PIR)-Schaumstoffen

### Beispiel 6 (Vergleich)

### A Komponente 100 GT eines Polyolgemisches der OH-Zahl 285 und einer Viskosität 2000 mPa.s bestehend aus 32,8 GT eines Polyethers der OH-Zahl 380, hergestellt durch Umsetzung einer Mischung aus Zucker und Wasser mit Propylenoxid 5,8 GT eines Polyethers der OH-Zahl 180, hergestellt durch Umsetzung von Propylenglykol mit Ethylenoxid 4,8 GT eines Polyethers der OH-Zahl 640, hergestellt durch Umsetzung von Ethylendiamin mit einer Mischung aus Ethylenoxid und Propylenoxid 19,2 GT Esterpolyol der OH-Zahl 210, hergestellt durch Umsetzung von Adipinsäure und Phthalsäure mit Glycerin und Propylenglykol 28,8 GT Tris-monochlor-isopropylphosphat als Flammschutzmittel 2,5 GT Ethylenglykol 3,8 GT eines Produkts der OH-Zahl 685, hergestellt durch Umsetzung von Phthalsäureanhydrid mit Diethylenglykol 1,9 GT eines handelsüblichen Polyether-Polysiloxan-Schaumstoffstabilisators (Tegostab® B 8443, Goldschmidt AG, Essen)

Dieser Abmischung wurden zugesetzt:
4,8 GT 25 gew.-%ige Kaliumacetatlösung in Diethylenglykol
0,6 GT N'N-Dimethyl-cyclohexylamin
0,6 GT Dimethylethanolamin
2,2 GT Wasser
10 GT n-Pentan

### B Komponente 250 GT Polyisocyanat (Desmodur 44P75, Bayer AG, Leverkusen) (NCO-Gehalt 28 Gew.-%) Die hergestellten Mischungen A und B wurden mittels eines Rührers (1000 UpM) bei 20 C intensiv gemischt, die Reaktionsmischung in einem offenen Karton mit den Innenabmessungen 20 x 20 x 20 cm eingebracht und aufschäumen lassen. Man erhielt einen gleichförmigen frei aufgeschäumten PUR/PIR-Hartschaumstoff mit einer Rohdichte von 30 kg/m³. Ein zweites Reaktionsgemisch von entsprechendem Mischungsverhältnis wurde in einer geschlossenen Form von 20 x 20 x 6 cm auf eine Rohdichte von 45 kg/m³ verdichtet. Die Wärmeleitfähigkeit dieses verdichteten Schaumstoffes lag bei 24 mW/Km (24 C Mitteltemperatur).

### Beispiel 7 (erfindungsgemäß)

### A Komponente 100 GT eines Polyolgemisches der OH-Zahl 285 und einer Viskosität 2000 mPa.s bestehend aus 32,8 GT eines Polyethers der OH-Zahl 380, hergestellt durch Umsetzung einer Mischung aus Zucker und Wasser mit Propylenoxid 5,8 GT eines Polyethers der OH-Zahl 180, hergestellt durch Umsetzung von Propylenglykol mit Ethylenoxid 4,8 GT eines Polyethers der OH-Zahl 640, hergestellt durch Umsetzung von Ethylendiamin mit einer Mischung aus Ethylenoxid und Propylenoxid 19,2 GT Esterpolyol der OH-Zahl 210, hergestellt durch Umsetzung von Adipinsäure und Phthalsäure mit Glycerin und Propylenglykol 28,8 GT Tris-monochlor-isopropylphosphat als Flammschutzmittel 2,5 GT Ethylenglykol 3,8 GT eines Produkts der OH-Zahl 685, hergestellt durch Umsetzung von Phthalsäureanhydrid mit Diethylenglykol 1,9 GT eines handelsüblichen Polyether-Polysiloxan-Schaumstoffstabilisators (Tegostab® B 8443, Goldschmidt AG, Essen)

Dieser Abmischung wurden zugesetzt:
4,8 GT 25 gew.-%ige Kaliumacetatlösung in Diethylenglykol
0,6 GT N'N-Dimethyl-cyclohexylamin
0,6 GT Dimethylethanolamin
1 GT Wasser

### B Komponente

Mischung aus
250 GT Polyisocyanat (Desmodur 44P75, Bayer AG, Leverkusen)
20 GT n-Pentan Die hergestellten Mischungen A und B wurden mittels eines Rührers (1000 U/min) bei 20 C intensiv gemischt, die Reaktionsmischung in einem offenen Karton mit den Innenabmessungen 20 x 20 x20 cm eingebracht und aufschäumen lassen. Die hergestellten Mischungen wurden wie im Beispiel 6 beschrieben zur Reaktion gebracht. Man erhielt einen frei aufgeschäumten gleichförmigen PUR/PIR-Hartschaumstoff mit einer Rohdichte von 29 kg/m³.

Die Wärmeleitzahl des auf eine Rohdichte von 45 kg/m³ verdichteten Schaumstoffes (analog Beispiel 6) lag bei 23 mW/Km (24 C Mitteltemperatur)

### Beispiel 8

### A Komponente 100 GT eines Polyolgemisches der OH-Zahl 285 und Viskosität 2000 mPa.s bestehend aus 32,8 GT eines Polyethers der OH-Zahl 380, hergestellt durch Umsetzung einer Mischung aus Zucker und Wasser mit Propylenoxid 5,8 GT eines Polyethers der OH-Zahl 180, hergestellt durch Umsetzung von Propylenglykol mit Ethylenoxid 4,8 GT eines Polyethers der OH-Zahl 640, hergestellt durch Umsetzung von Ethylendiamin mit einer Mischung aus Ethylenoxid und Propylenoxid 19,2 GT Esterpolyol der OH-Zahl 210, hergestellt durch Umsetzung von Adipinsäure und Phthalsäure mit Glycerin und Propylenglykol 28,8 GT Tris-monochlor-isopropylphosphat als Flammschutzmittel 2,5 GT Ethylenglykol 3,8 GT eines Produkts der OH-Zahl 685, hergestellt durch Umsetzung von Phthalsäureanhydrid mit Diethylenglykol 1,9 GT eines handelsüblichen Polyether-Polysiloxan-Schaumstoffstabilisators (Tegostab® B 8443, Goldschmidt AG, Essen)

Dieser Abmischung wurden zugesetzt:
4,8 GT 25 gew.-%ige Kaliumacetatlösung in Diethylenglykol
0,6 GT N'N-Dimethyl-cyclohexylamin
0,6 GT Dimethylethanolamin
1 GT Wasser

### B Komponente

Mischung aus
250 GT Polyisocyanat (Desmodur 44P75, Bayer AG, Leverkusen)
29 GT Cyclopentan
Die hergestellten Mischungen A und B wurden mittels eines Rührers (1000 U/min) bei 20 C intensiv gemischt, die Reaktionsmischung in einem offenen Karton mit den Innenabmessungen 20 x 20 x20 cm eingebracht und aufschäumen lassen. Die hergestellten Mischungen wurden wie im Beispiel 6 beschrieben zur Reaktion gebracht. Man erhielt einen frei aufgeschäumten gleichförmigen PUR/PIR-Hartschaumstoff mit einer Rohdichte von 28 kg/m³. Ein zweites Reaktionsgemisch wurde in einer geschlossenen Form (analog Beispiel 6) auf eine Rohdichte von 45-46 kg/m³ verdichtet.

Die Wärmeleitzahl dieses verdichteten Schaumstoffes lag bei 21 mW/Km (24 C Mitteltemperatur).

## Patentansprüche

1. Mischungen von Polyisocyanaten und Pentan und/oder Cyclopentan.

2. Mischungen gemäß Anspruch 1, enthaltend n-Pentan und/oder i-Pentan und/oder Cyclopentan.

3. Mischungen gemäß Anspruch 1 und 2, enthaltend 1 bis 30 Gew.-% n-Pentan und/oder i-Pentan und/oder Cyclopentan.

4. Verfahren zur Herstellung von Urethan- und gegebenenfalls Isocyanuratgruppen aufweisenden Hartschaumstoffen durch Umsetzung von
a) Mischungen von Polyisocyanaten mit Pentan und/oder Cyclopentan mit
b) Verbindungen mit mindestens zwei gegenüber Isocyanaten reaktionsfähigen Wasserstoffatomen vom Molekulargewicht 400 bis 10.000 und
c) gegebenenfalls Verbindungen mit mindestens zwei gegenüber Isocyanaten reaktionsfähigen Wasserstoffatomen und einem Molekulargewicht von 32-399, gegebenenfalls in Gegenwart von
d) weiteren Treibmitteln und an sich bekannten Hilfs- und Zusatzstoffen.

5. Verfahren nach Anspruch 4, dadurch gekennzeichnet, daß die Komponente a) als Polyisocyanat ein polymeres Diphenylmethandiisocyanat (MDI) mit einem Gehalt an monomerem MDI von 25-70 Gew.-% oder ein urethanmodifiziertes polymeres MDI mit einem Gehalt an monomerem MDI von 35-70 Gew.-% enthält.

6. Verfahren nach Anspruch 4 und 5, dadurch gekennzeichnet, daß die Komponente a) n-Pentan und/oder i-Pentan und/oder Cyclopentan enthält.

7. Verfahren nach Anspruch 4 bis 6, dadurch gekennzeichnet, daß die Komponente a) 1 bis 30 Gew.-% n-Pentan und/oder i-Pentan und/oder Cyclopentan enthält.

8. Verfahren nach Anspruch 4 bis 7, dadurch gekennzeichnet, daß die Komponente b) 0,4 bis 4 Gew.-% Wasser als Co-Treibmittel und gegebenenfalls Schaumstabilisatoren, Flammschutzmitteln und Katalysatoren enthält.

9. Verwendung der gemäß Ansprüchen 4 bis 8 erhältlichen Urethan- und gegebenenfalls Isocyanuratgruppen aufweisenden Hartschaumstoffe als Wärmedämmaterialien.
